(19) **Europäisches Patentamt European Patent Office Office européen des brevets**

(11) **EP 4 620 764 A1**

(12) **EUROPEAN PATENT APPLICATION**
published in accordance with Art. 153(4) EPC

(43) Date of publication:
24.09.2025 Bulletin 2025/39

(21) Application number: 23891496.4

(22) Date of filing: 10.11.2023

(51) International Patent Classification (IPC):
B60W 40/00 $^{(2006.01)}$       B60G 3/00 $^{(2006.01)}$
B60L 15/20 $^{(2006.01)}$       B60W 40/02 $^{(2006.01)}$
B60W 40/06 $^{(2012.01)}$       B60W 40/10 $^{(2012.01)}$
B62D 7/15 $^{(2006.01)}$        G08G 1/00 $^{(2006.01)}$

(52) Cooperative Patent Classification (CPC):
B60G 3/00; B60L 15/20; B60W 40/00; B60W 40/02;
B60W 40/06; B60W 40/10; B62D 7/15; G08G 1/00

(86) International application number:
PCT/JP2023/040649

(87) International publication number:
WO 2024/106349 (23.05.2024 Gazette 2024/21)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 14.11.2022 JP 2022182131
06.04.2023 JP 2023062335
10.04.2023 JP 2023063765

(71) Applicant: SoftBank Group Corp.
Tokyo 105-7537 (JP)

(72) Inventor: SON, Masayoshi
Tokyo 105-7537 (JP)

(74) Representative: DREISS Patentanwälte PartG
mbB
Friedrichstraße 6
70174 Stuttgart (DE)

(54) **INFORMATION PROCESSING DEVICE AND PROGRAM**

(57) An information processing device disclosed herein includes: a calculation unit that calculates, for each of plural combinations of a predetermined number of pieces of sensor information among plural pieces of sensor information included in a vehicle, index values for controlling a wheel speed and an inclination of each of four wheels of the vehicle, and suspensions that support the wheels for each of the wheel speed, the inclination, and the suspension, and calculates a control variable for each of the wheel speed, the inclination, and the suspension by aggregating the index values; and a control unit that controls autonomous driving on the basis of the control variable.

FIG.1

**Description**

Technical Field

The present invention relates to an information processing device and a program.

Background Art

Japanese Patent Application Laid-Open (JP-A) No. 2022-035198 describes a vehicle having an autonomous driving function.

SUMMARY OF INVENTION

Technical Problem

An object of the present disclosure is to obtain an information processing device and a program capable of controlling autonomous driving on the basis of an index value acquired by a combination of sensors mounted on a vehicle.

Solution to Problem

According to a first aspect of the disclosure, there is provided an information processing device including: a calculation unit that calculates, for each of a plurality of combinations of a predetermined number of pieces of sensor information among a plurality of pieces of sensor information included in a vehicle, index values for controlling a wheel speed and an inclination of each of four wheels of the vehicle, and suspensions that support the wheels for each of the wheel speed, the inclination, and the suspension, and calculates control variables for each of the wheel speed, the inclination, and the suspension by aggregating the index values; and a control unit that controls autonomous driving on the basis of the control variables.

According to a second aspect of the disclosure, in the information processing device according to the first aspect, the control unit controls the autonomous driving in units of a billionth of a second on the basis of the control variables.

According to a third aspect of the disclosure, in the information processing device according to the first aspect, the calculation unit selects a combination of the plurality of pieces of sensor information for autonomous driving control targets including at least a wheel speed, an inclination, and a suspension, and calculates a predetermined number of index values for each autonomous driving control target by the combination of the selected pieces of sensor information.

According to a fourth aspect of the disclosure, in the information processing device according to the third aspect, the calculation unit calculates a predetermined number of index values for each autonomous driving control target on the basis of the combination of the plurality of pieces of sensor information changed according to a traveling status of the vehicle.

According to a fifth aspect of the disclosure, there is provided an information processing device including: a calculation unit that calculates, for each of a plurality of combinations of a predetermined number of pieces of sensor information among a plurality of pieces of sensor information included in a vehicle, index values for controlling autonomous driving control targets including at least a wheel speed and an inclination of each wheel of the vehicle, and suspensions that support the wheels for each of the wheel speed, the inclination, and the suspension, and calculates a control variable for each autonomous driving control target by aggregating the index values; and a control unit that controls autonomous driving on the basis of the control variable calculated by the calculation unit, in which the calculation unit uses a control variable calculated for one autonomous driving control target as an index value for calculating a control variable for another autonomous driving control target.

According to a sixth aspect of the disclosure, in the information processing device according to the fifth aspect, the calculation unit weights the mutually used control variables of the autonomous driving control target.

According to a seventh aspect of the disclosure, in the information processing device according to the first aspect or the fifth aspect, the calculation unit calculates the control variable from the index value by multivariate analysis by an integration method using deep learning.

According to an eighth aspect of the disclosure, in the information processing device according to the first aspect or the fifth aspect, the inclination includes a steering angle and a camber angle.

According to a ninth aspect of the disclosure, in the information processing device according to the fifth aspect, the calculation unit selects a combination of the plurality of pieces of sensor information for the autonomous driving control target, and calculates a predetermined number of index values for each autonomous driving control target on the basis of the combination of the selected pieces of sensor information.

According to a tenth aspect of the disclosure, there is provided a program for causing a computer to function as the information processing device.

The summary of the disclosure does not enumerate all the necessary features of the disclosure. A sub-combination of these feature groups may also be disclosed.

BRIEF DESCRIPTION OF DRAWINGS

Fig. 1 is a diagram schematically illustrating danger prediction capability of AI in ultra-high performance autonomous driving according to a first embodiment.
Fig. 2 is a diagram schematically illustrating an example of a network configuration in a vehicle according to the first embodiment.
Fig. 3 is a flowchart executed by a Central Brain according to the first embodiment.
Fig. 4 is a first explanatory diagram for explaining an example of autonomous driving control by the Central Brain according to the first embodiment.
Fig. 5 is a second explanatory diagram for explaining an example of autonomous driving control by the Central Brain according to the first embodiment.
Fig. 6 is a third explanatory diagram for explaining an example of autonomous driving control by the Central Brain according to the first embodiment.
Fig. 7 is a fourth explanatory diagram for explaining an example of autonomous driving control by the Central Brain according to the first embodiment.
Fig. 8 is a fifth explanatory diagram for explaining an example of autonomous driving control by the Central Brain according to the first embodiment.
Fig. 9 is a diagram schematically illustrating an example of a hardware configuration of a computer that functions as the Central Brain.
Fig. 10 is a flowchart executed by a Central Brain according to a third embodiment.

DESCRIPTION OF EMBODIMENTS

Hereinafter, the disclosure will be described through embodiments of the disclosure, but the following embodiments do not limit the disclosure according to the claims. In addition, not all combinations of features described in the embodiments are essential to the solutions of the invention.

First Embodiment

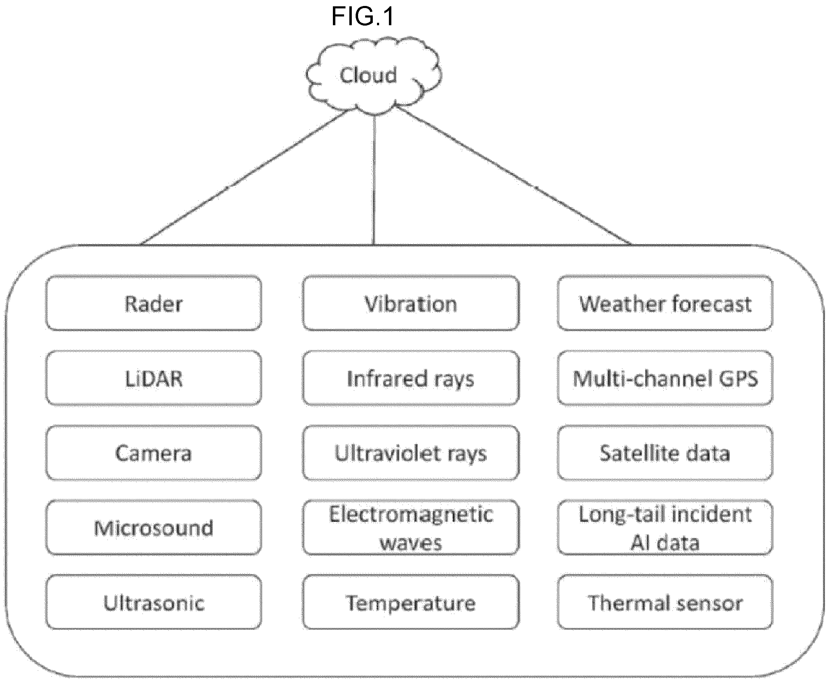

Fig. 1 schematically illustrates the capability of predicting a danger of AI in ultra-high performance autonomous driving according to a first embodiment. In the first embodiment, a plurality of types of sensor information is converted into AI data and accumulated in a cloud. The AI predicts and determines the best mix of situations every nanosecond (one billionth of a second) and optimizes the operation of a vehicle 12.

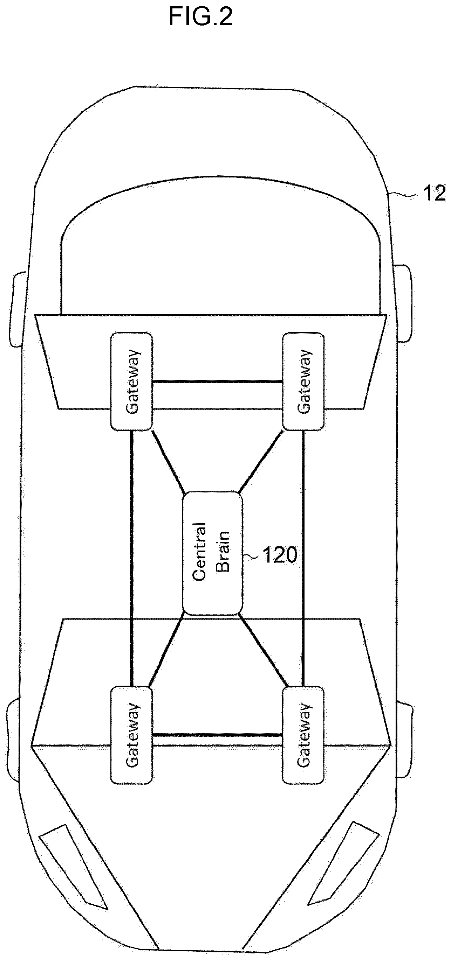

Fig. 2 is a diagram for explaining a configuration of a Central Brain 120 in the vehicle 12. The Central Brain 120 is an example of an information processing device.

As illustrated in Fig. 2, a plurality of Gate Ways are communicatively connected to the Central Brain 120. The Central Brain 120 is connected to an external cloud via a Gate Way. The Central Brain 120 is configured to be able to access an external cloud via the Gate Way. On the other hand, due to the presence of the Gate Way, the Central Brain 120 is configured not to be able to be directly accessed from the outside.

The Central Brain 120 outputs a request signal to the server every time a predetermined time elapses. Specifically, the Central Brain 120 outputs a request signal indicating an inquiry to the server every one billionth of a second.

In addition, examples of the sensor installed in the vehicle 12 used in the first embodiment include a radar, LiDAR, a high-pixel/telephoto/ultra-wide angle/360 degrees/high-performance camera, vision recognition, fine sound, ultrasonic wave, vibration, infrared ray, ultraviolet ray, electromagnetic wave, temperature, humidity, spot AI weather forecast, high-accuracy multi-channel GPS, low-altitude satellite information, long tail incident AI data, and the like. The long tail incident AI data is Trip data of the vehicle equipped with Level 5.

Examples of the sensor information to be taken in from the plurality of types of sensors include movement of the center of gravity of the weight, detection of the material of the road, detection of the outside air temperature, detection of the outside air humidity, detection of the vertical and lateral oblique inclination angle of the slope, detection of the degree of freezing of the road and the moisture amount, detection of the material, the wear situation, the air pressure of each tire, the road width, the presence or absence of prohibition of overtaking, the vehicle type information of the oncoming vehicle and the front and rear vehicles, the cruising state of these vehicles, the surrounding situation (birds, animals, soccer balls, accident vehicles, earthquakes, fires, winds, typhoons, heavy rain, light rain, snowstorm, fog, and the like), and the like. In the first embodiment, these detections are performed every billionth of a second.

In the first embodiment, the Central Brain 120 functions as a calculation unit that calculates, for each of a plurality of combinations of a predetermined number of pieces of sensor information among pieces of sensor information detected by the sensors, a control variable for controlling a wheel speed and an inclination of each of the four wheels of the vehicle, and suspensions that support the wheels for each of the wheel speed, the inclination, and the suspension. The inclination of the wheel includes both the inclination of the wheel with respect to an axis horizontal to the road (in other words, the angle is an angle at which the front wheel is turning right or left with respect to the vehicle body, and is referred to as a steering angle) and the inclination of the wheel with respect to an axis vertical to the road (in other words, the angle is an angle between the tire and the ground when the vehicle is viewed straight from the front, and is called a camber angle). The autonomous driving control target may include other autonomous driving control targets such as a braking force, a pitch angle, and a vehicle height, in addition to the wheel speed, the inclination, and the suspension. The wheel speed, the inclination (steering angle, camber angle), and the suspension can be regarded as autonomous driving control elements for controlling autonomous driving.

Here, the predetermined number is, for example, three. An index value for controlling the wheel speed, the inclination, and the suspension is calculated on the basis of the three pieces of sensor information. The number of index values calculated from the combination of the three pieces of sensor information is, for example, three. The index values for controlling the wheel speed, the inclination, and the suspension include, for example, an index value calculated from information on air resistance among the pieces of sensor information, an index value calculated from information on road resistance among the pieces of sensor information, and an index value calculated from information on a slip coefficient among the pieces of sensor information. Then, the index values calculated for each combination of the plurality of pieces of sensor information having different combinations of sensor information are aggregated to calculate control variables for controlling the wheel speed, the inclination, and the suspension. For example, a plurality of index values are calculated by a combination of sensors 1, 2, and 3, a plurality of index values are calculated by a combination of sensors 4, 5, and 6, a plurality of index values are calculated by a combination of sensors 1, 3, and 7, and the control variables are calculated by aggregating these index values. In this manner, a predetermined number, for example, 300 index values are calculated while changing the combination of the sensor information, and the control variable is calculated. Specifically, the calculation unit may be capable of calculating the control variable from the sensor information using machine learning, more specifically, deep learning. In other words, the calculation unit can include artificial intelligence (AI).

The calculation unit can obtain an accurate control variable by performing multivariate analysis (see, for example, Formula (2)) by an integration method as shown in the following Formula (1), for example, for a wheel speed V using calculation power of Level 6 for data per nanosecond collected by many sensor groups and the like. More specifically, while obtaining an integral value of delta values of various Ultra High Resolution with calculation power of Level 6, an indexed value of each variable is obtained at an edge level and in real time, and a result occurring in the next nanosecond can be obtained as the highest probability theoretical value.

[Mathematical formula 1]

$$V = \int_a^b f(A)dt \qquad (1)$$

[Mathematical formula 2]

$$V_n = DL\big(f(A, B, C, \ldots, N)(dA_n/dt)\big) \qquad (2)$$

Formula (2) represents a control variable. Further, DL in Formula (2) indicates deep learning, and A, B, C, D,..., and N are index values calculated from sensor information, and indicate, for example, an index value calculated from air resistance, an index value calculated from road resistance, an index value calculated from a road element, an index value calculated from a slip coefficient, and the like. In a case in which the number of index values calculated while changing the combination of the predetermined number of pieces of sensor information is 300, the number of index values of A to N in the formula is also 300, and 300 index values are aggregated.

In the Formulas (1) and (2), the wheel speed (V) is calculated, but the inclination (steering angle, camber angle) and the control variable for controlling the suspension are similarly calculated.

Specifically, the Central Brain 120 calculates a total of 16 control variables for controlling the wheel speed of each of the four wheels, the inclination of each of the four wheels with respect to an axis horizontal to the road (steering angle, camber angle), the inclination of each of the four wheels with respect to an axis vertical to the road (steering angle, camber angle), and the suspension supporting each of the four wheels. In the present embodiment, the 16 control variables are calculated every billionth of a second.

The wheel speed of each of the four wheels can be said as "the number of spins (rotation speed) of the in-wheel motor mounted on each of the four wheels". The inclination (steering angle) of each of the four wheels with respect to the axis horizontal to the road can be said as "the horizontal angle of each of the four wheels". The inclination (camber angle) of each of the four wheels with respect to an axis vertical to the road can be referred to as "vertical angle of each of the four wheels". The suspension (coil spring, shock absorber) that determines the position of the wheel with respect to the road can be said to be "the attenuation amount that absorbs the impact received from the road of each of the four wheels".

For example, when the vehicle travels on a mountain road, the control variable is a numerical value for performing optimum steering in accordance with the mountain road, and when the vehicle is parked in a parking lot, the control variable is a numerical value for traveling at an optimum angle in accordance with the parking lot.

Furthermore, in the present embodiment, the Central Brain 120 calculates a total of 16 control variables for controlling the wheel speed of each of the four wheels, the inclination (steering angle) of each of the four wheels with respect to an axis horizontal to the road, the inclination (camber angle) of each of the four wheels with respect to an axis vertical to the road, and the suspension supporting each of the four wheels. However, this calculation does not need to be performed by the Central Brain 120, and a dedicated anchor chip for calculating the control variables may be separately provided. Also in this case, DL in Formula (2) indicates deep learning, and A, B, C, D,..., and N indicate value index values calculated from the sensor information. When the number of indexes to be aggregated is 300 as described above, the number of indexes in such a formula is also 300.

Furthermore, in the present embodiment, the Central Brain 120 functions as a control unit that controls autonomous driving in units of one billionth of a second on the basis of the control variables calculated above. Specifically, the Central Brain 120 controls the in-wheel motors mounted on the four wheels on the basis of the 16 control variables, thereby controlling the wheel speed and inclination of each of the four wheels of the vehicle 12 and the suspension supporting each of the four wheels to perform autonomous driving.

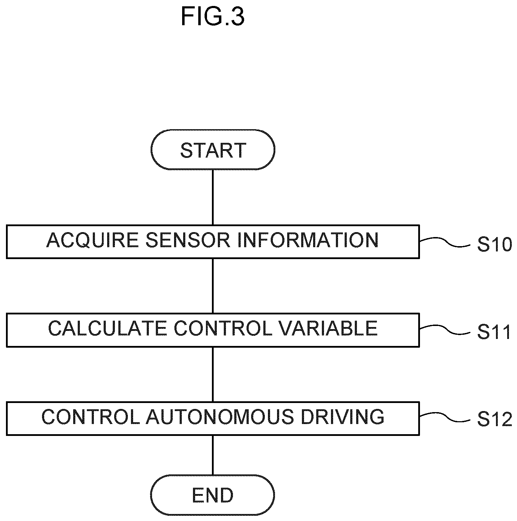

The Central Brain 120 repeatedly executes the flowchart illustrated in Fig. 3.

In step S10, the Central Brain 120 acquires sensor information including road information detected by the sensor. Then, the Central Brain 120 proceeds to step S11.

In step S11, the Central Brain 120 calculates the 16 control variables on the basis of the sensor information acquired in step S10. Then, the Central Brain 120 proceeds to step S12.

In step S12, the Central Brain 120 controls the autonomous driving on the basis of the control variable calculated in step S11. Then, the Central Brain 120 ends the processing of the flowchart.

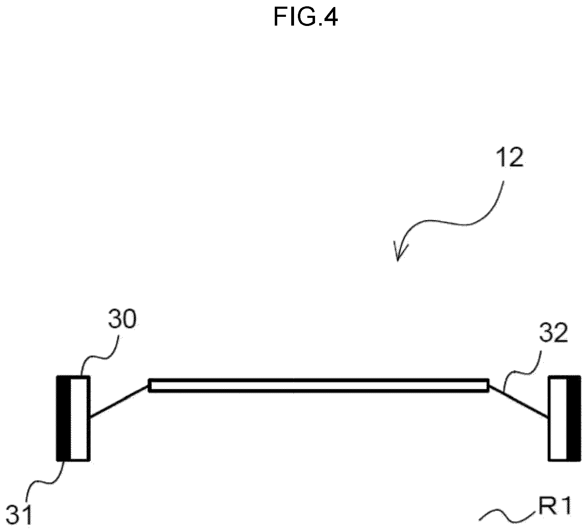

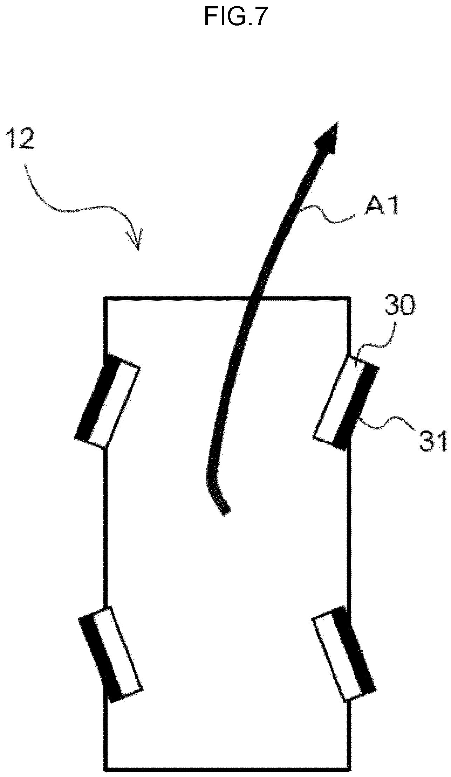

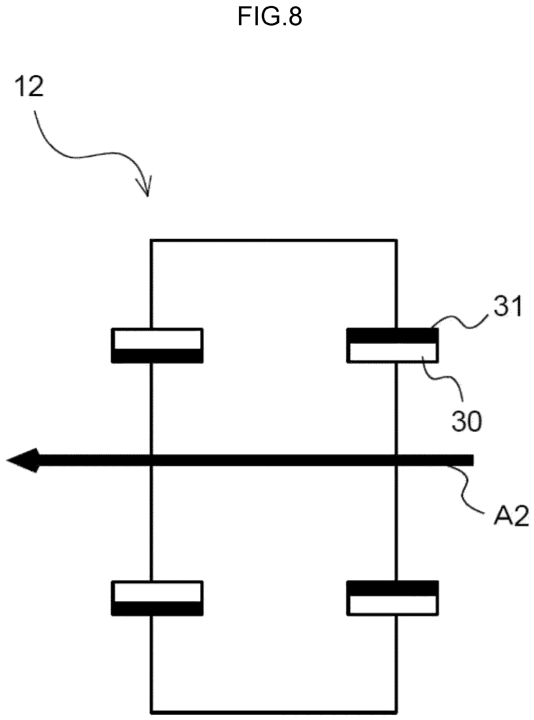

Figs. 4 to 8 are explanatory diagrams for explaining an example of autonomous driving control by the Central Brain 120. Note that Figs. 4 to 6 are explanatory diagrams of a viewpoint of the vehicle 12 as viewed from the front, and Figs. 7 and 8 are explanatory diagrams of a viewpoint of the vehicle 12 as viewed from below.

Fig. 4 illustrates a case in which the vehicle 12 is traveling on a flat road R1. The Central Brain 120 controls the in-wheel motors 31 mounted on four wheels 30 on the basis of the 16 control variables calculated in accordance with the road R1, thereby controlling the wheel speed and inclination (steering angle, camber angle) of each of the four wheels 30 and suspension 32 supporting each of the four wheels 30 to perform autonomous driving.

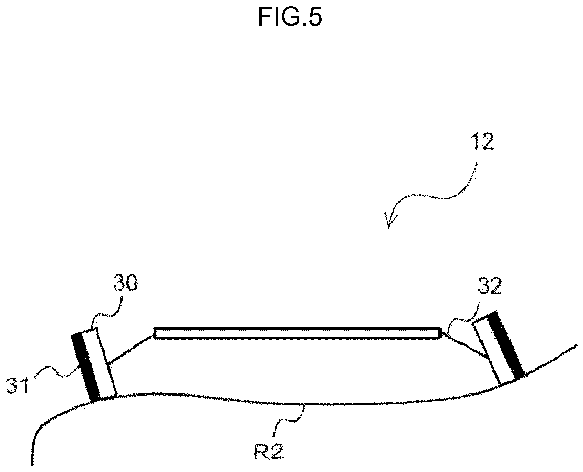

Fig. 5 illustrates a case in which the vehicle 12 is traveling on a mountain road R2. The Central Brain 120 controls the in-wheel motors 31 mounted on the four wheels 30 on the basis of the 16 control variables calculated in accordance with the mountain road R2, thereby controlling the wheel speed and inclination (steering angle, camber angle) of each of the four wheels 30 and the suspension 32 supporting each of the four wheels 30 to perform autonomous driving.

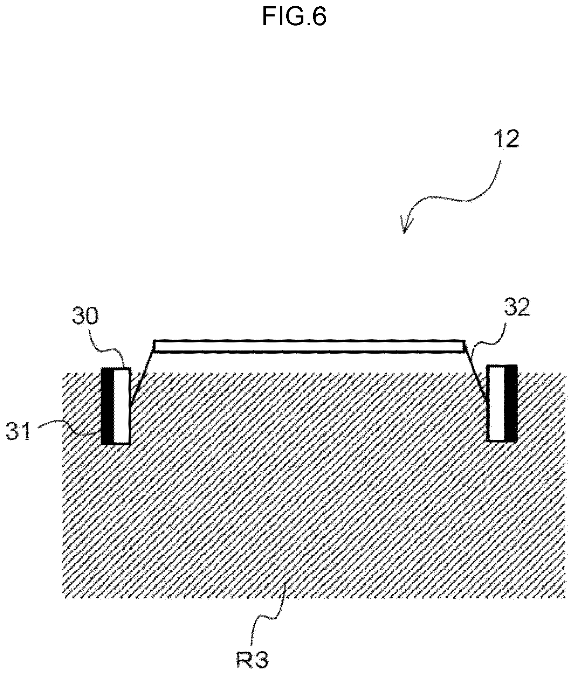

Fig. 6 illustrates a case in which the vehicle 12 is traveling in a puddle R3. The Central Brain 120 controls the in-wheel motors 31 mounted on the four wheels 30 on the basis of the 16 control variables calculated in accordance with the puddle R3, thereby controlling the wheel speed and inclination of each of the four wheels 30 and the suspension 32 supporting each of the four wheels 30 to perform autonomous driving.

Fig. 7 illustrates a case in which the vehicle 12 curves in a direction indicated by an arrow A1. The Central Brain 120 controls the in-wheel motor 31 mounted on each of the four wheels 30 on the basis of the 16 control variables calculated according to the entering curved road, thereby controlling the wheel speed and inclination (steering angle, camber angle) of each of the four wheels 30 and the suspension 32 (not illustrated) supporting each of the four wheels 30 to perform autonomous driving.

Fig. 8 illustrates a case in which the vehicle 12 translates in a direction indicated by an arrow A2. The Central Brain 120 controls the in-wheel motors 31 mounted on the four wheels 30 on the basis of the 16 control variables calculated in accordance with the parallel movement in the direction indicated by the arrow A2, thereby controlling the wheel speed and inclination (steering angle, camber angle) of each of the four wheels 30 and the suspension 32 (not illustrated) supporting each of the four wheels 30 to perform autonomous driving.

The states (inclination (steering angle, camber angle)) of the wheel 30 and the suspension 32 illustrated in Figs. 4 to 8 are merely examples, and it goes without saying that states of the wheel 30 and the suspension 32 different from the states illustrated in the respective drawings may occur.

Here, an in-wheel motor mounted on a conventional vehicle can independently control each drive wheel, but in the vehicle, it is not possible to control the in-wheel motor by analyzing a road condition or the like. Therefore, in the vehicle, for example, when traveling on a mountain road, a puddle, or the like, appropriate autonomous driving on the basis of the road condition or the like cannot be performed.

However, according to the vehicle 12 according to the present embodiment, it is possible to perform autonomous driving in which speed, steering, and the like are controlled in accordance with an environment such as a road condition on the basis of the configuration described above.

Second Embodiment

Next, a second embodiment of the disclosure will be described. The basic configuration and the like of the second embodiment are similar to those of the first embodiment illustrated in Figs. 1 to 8.

In the second embodiment, the calculation unit can obtain an accurate control variable by performing multivariate analysis (see, for example, Formula (4)) by an integration method as shown in the following Formula (3), for example, for the wheel speed V using the calculation power of Level 6 for data per nanosecond collected by many sensor groups and the like. More specifically, while obtaining an integral value of delta values of various Ultra High Resolution with calculation power of Level 6, an indexed value of each variable is obtained at an edge level and in real time, and a result occurring in the next nanosecond can be obtained as the highest probability theoretical value.

[Mathematical formula 3]

$$V = \int_a^b f(A)dt \qquad (3)$$

[Mathematical formula 4]

$$V_n = DL\big(f(A, B, \ldots, S, C, R, \ldots, N)(dA_n/dt)\big) \qquad (4)$$

Formula (4) represents a control variable. Further, DL in Formula (4) indicates deep learning, and A, B, C, D,..., and N are index values calculated from sensor information, and indicate, for example, an index value calculated from air resistance, an index value calculated from road resistance, an index value calculated from a road element, an index value calculated from a slip coefficient, and the like. In a case in which the number of index values calculated while changing the combination of the predetermined number of pieces of sensor information is 300, the number of index values of A to N in the formula is also 300, and 300 index values are aggregated.

Here, Formula (4) includes variables expressed as "S", "C", and "R", separately from the index values of A to N.

Formula (10) is a control variable calculated for a suspension S (see Formula (9) to be described later), a variable "C" is a control variable calculated for a camber angle C (see Formula (7) to be described later), and a variable "R" is a control variable calculated for a steering angle R (see Formula (5) to be described later).

In the Formulas (3) and (4), the wheel speed (V) is calculated, but the inclination (steering angle, camber angle) and the control variable for controlling the suspension are similarly calculated.

That is, regarding the inclination (steering angle R), an accurate control variable can be obtained by performing multivariate analysis (for example, see Formula (6)) by an integration method as shown in Formula (5).

[Mathematical formula 5]

$$R = \int_a^b f(A)dt \qquad (5)$$

[Mathematical formula 6]

$$R_n = DL\big(f(A, B, \ldots, V, S, C, \ldots, N)(dA_n/dt)\big) \qquad (6)$$

Here, Formula (6) represents a control variable. In addition, Formula (6) includes variables expressed as "V", "S", and "C", separately from the index values of A to N.

Formula (4) is a control variable calculated for the wheel speed V (see Formula (3)), Formula (10) is a control variable calculated for the suspension S (see Formula (9)), and Formula (8) is a control variable calculated for the camber angle C (see Formula (7)).

Regarding the inclination (camber angle C), an accurate control variable can be obtained by performing multivariate analysis (for example, see Formula (8)) by an integration method as shown in Formula (7) below.

[Mathematical formula 7]

$$C = \int_a^b f(A)dt \qquad (7)$$

[Mathematical formula 8]

$$C_n = DL\big(f(A, B, \dots, V, S, R, \dots, N)(dA_n/dt)\big) \qquad (8)$$

Here, Formula (8) includes variables expressed as "V", "S", and "R", separately from the index values of A to N.

Formula (4) is a control variable calculated for the wheel speed V (see Formula (3)), Formula (10) is a control variable calculated for the suspension S (see Formula (9)), and Formula (5) is a control variable calculated for the steering angle R (see Formula (4)).

For the suspension S, an accurate control variable can be obtained by performing multivariate analysis (for example, see Formula (10)) by an integration method as shown in Formula (9) below.

[Mathematical formula 9]

$$S = \int_a^b f(A)dt \qquad (9)$$

[Mathematical formula 10]

$$S_n = DL\big(f(A, B, \dots, V, C, R, \dots, N)(dA_n/dt)\big) \qquad (10)$$

Here, Formula (10) includes variables expressed as "V", "C", and "R", separately from the index values of A to N.

Formula (4) is a control variable calculated for the wheel speed V (see Formula (3)), Formula (8) is a control variable calculated for the camber angle C (see Formula (7)), and Formula (6) is a control variable calculated for the steering angle R (see Formula (5)).

Third Embodiment

Next, a third embodiment of the disclosure will be described. Since the basic configuration of the third embodiment is similar to the configuration of the first embodiment illustrated in Figs. 1 and 2, the drawings illustrated as the first embodiment will be appropriately referred to.

A feature of the third embodiment is selection of sensor information when an index value is acquired.

In the first embodiment, the index value for controlling the wheel speed, the inclination (steering angle, camber angle), and the suspension is calculated on the basis of a predetermined number (for example, three) of pieces of sensor information.

That is, by aggregating index values calculated for each combination of a plurality of pieces of sensor information having different combinations of sensor information and calculating control variables for controlling the wheel speed, the inclination (steering angle, camber angle), and the suspension, a predetermined number, for example, 300 index values are calculated while changing the combination of the sensor information, and the control variables are calculated.

However, the wheel speed, the inclination (steering angle, camber angle), and each element of the suspension (autonomous driving control element) do not necessarily require information of all the sensors, and data having a low contribution degree may be included in the acquired 300 index values.

Therefore, in the third embodiment, sensors are selected for each wheel speed, inclination (steering angle, camber angle), and autonomous driving control element of the suspension, and a predetermined number, for example, 300 index values are calculated by a combination of the selected sensors. For example, the degree of contribution as to whether the sensor contributes to vehicle control (wheel speed, inclination, and suspension) is determined for each vehicle control, and the sensor necessary for calculating the index value is determined for each vehicle control.

That is, 300 index values necessary for calculating the wheel speed are prepared as the control variable of the wheel speed, 300 index values necessary for calculating the inclination (steering angle, camber angle) are prepared as the control variable of the inclination (steering angle, camber angle), and 300 index values necessary for calculating the suspension are prepared as the control variable of the suspension.

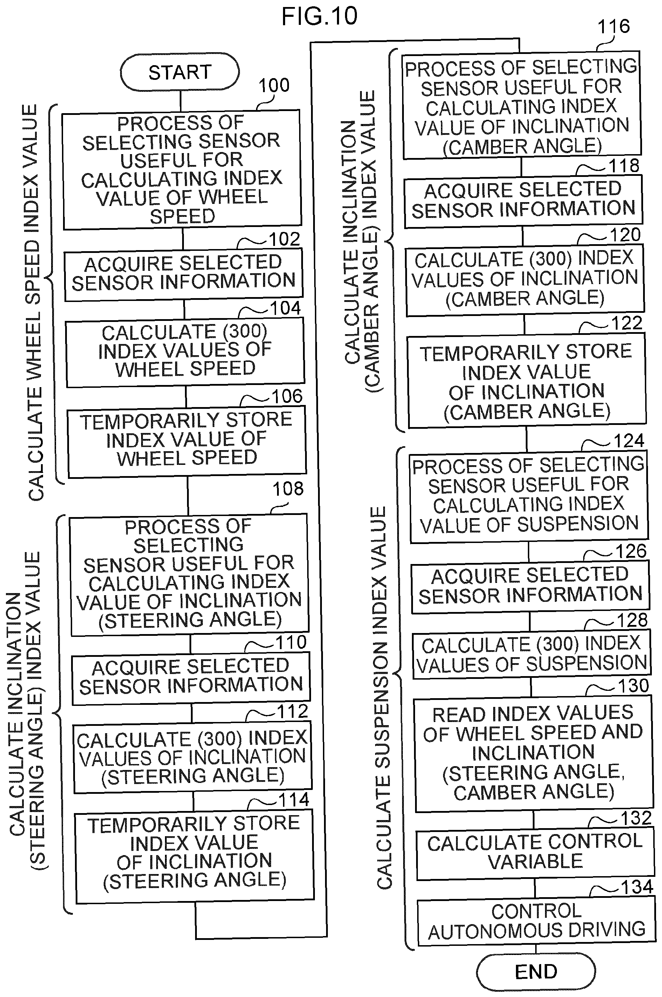

The Central Brain 120 according to the third embodiment repeatedly executes the flowchart illustrated in Fig. 10. In Fig. 10, the flow of processing by the software program is described, and it is assumed that the flowchart can be executed in one billionth of a second.

Not only the software program but also a semiconductor integrated circuit such as an application specific integrated circuit (ASIC), a field programmable gate array (FPGA), or a complex programmable logic device (CPLD) is preferably used to reliably execute the flowchart illustrated in Fig. 10 in one billionth of a second.

In step 100, a process of selecting a sensor useful for calculating the index value V of the wheel speed, which is one of the autonomous driving control elements, is executed, and the process proceeds to step 102.

In step 102, information (sensor information) from the sensor selected in step 100 is acquired, and the process proceeds to step 104.

In step 104, the index value Vn (n=about 300) of the wheel speed is calculated on the basis of the sensor information, the process proceeds to step 106, the calculated index value of the wheel speed is temporarily stored, and the process proceeds to step 108.

In step 108, a process of selecting a sensor useful for calculating the index value R of the inclination (steering angle) which is one of the autonomous driving control elements is executed, and the process proceeds to step 110.

In step 110, information (sensor information) from the sensor selected in step 108 is acquired, and the process proceeds to step 112.

In step 112, the index value Rn (n=about 300) of the inclination (steering angle) is calculated on the basis of the sensor information, the process proceeds to step 114, the calculated index value of the inclination (steering angle) is temporarily stored, and the process proceeds to step 116.

In step 116, a process of selecting a sensor useful for calculating an index value C of an inclination (camber angle) which is one of the autonomous driving control elements is executed, and the process proceeds to step 118.

In step 118, information (sensor information) from the sensor selected in step 116 is acquired, and the process proceeds to step 120.

In step 120, the index value Cn (n=about 300) of the inclination (camber angle) is calculated on the basis of the sensor information, the process proceeds to step 122, and the calculated index value of the inclination (camber angle) is temporarily stored, and the process proceeds to step 124.

In step 124, a process of selecting a sensor useful for calculating the index value S of the suspension, which is one of the autonomous driving control elements, is executed, and the process proceeds to step 126.

In step 126, information (sensor information) from the sensor selected in step 124 is acquired, and the process proceeds to step 128.

In step 128, index values Sn (n=about 300) of the suspensions are calculated on the basis of the sensor information, and the process proceeds to step 130.

In step 130, the index value Vn of the wheel speed temporarily stored in step 106, the index value Rn of the inclination (steering angle) temporarily stored in step 114, and the index value Cn of the inclination (camber angle) temporarily stored in step 122 are read, and the process proceeds to step 132 to calculate a control variable including the index value Sn of the suspension calculated in step 128, and then the process proceeds to step 134.

In step 134, the autonomous driving is controlled on the basis of the control variable calculated in step 132. In selection of a sensor, selection requirements may be appropriately changed according to a vehicle situation.

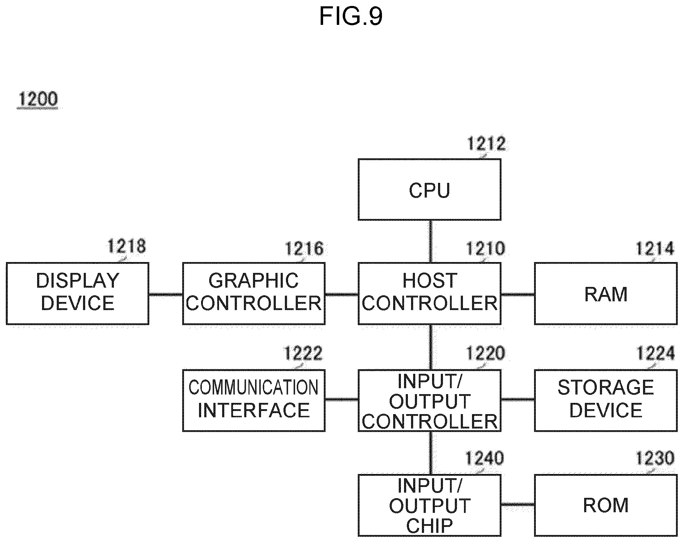

Fig. 9 schematically illustrates an example of a hardware configuration of a computer 1200 that functions as the Central Brain 120. The program installed in the computer 1200 can cause the computer 1200 to function as one or more "units" of the device according to the first embodiment, the second embodiment, and the third embodiment, or cause the computer 1200 to execute an operation associated with the device according to the first embodiment, the second embodiment, and the third embodiment or one or more "units" thereof, and/or cause the computer 1200 to execute a process according to the first embodiment, the second embodiment, and the third embodiment or a stage of the process. Such programs may be executed by a CPU 1212 to cause the computer 1200 to perform certain operations associated with some or all of the blocks in the flowcharts and block diagrams described herein.

The computer 1200 according to the first embodiment, the second embodiment, and the third embodiment includes a CPU 1212, a RAM 1214, and a graphic controller 1216, which are mutually connected by a host controller 1210. The computer 1200 also includes input/output units such as a communication interface 1222, a storage device 1224, a DVD drive, and an IC card drive, which are connected to the host controller 1210 via an input/output controller 1220. The DVD drive may be a DVD-ROM drive, a DVD-RAM drive, or the like. The storage device 1224 may be a hard disk drive, a solid state drive, or the like. The computer 1200 also includes a ROM 1230 and legacy input/output units such as a keyboard, which are connected to the input/output controller 1220 via an input/output chip 1240.

The CPU 1212 operates according to programs stored in the ROM 1230 and the RAM 1214, thereby controlling each unit. The graphic controller 1216 obtains image data generated by the CPU 1212 in a frame buffer or the like provided in the RAM 1214 or the graphic controller itself, and causes the image data to be displayed on the display device 1218.

The communication interface 1222 communicates with other electronic devices via a network. The storage device 1224 stores programs and data used by the CPU 1212 in the computer 1200. The DVD drive reads a program or data from a DVD-ROM or the like and provides the program or data to the storage device 1224. The IC card drive reads the program and data from the IC card and/or writes the program and data to the IC card.

The ROM 1230 stores therein a boot program executed by the computer 1200 at the time of activation and/or a program depending on hardware of the computer 1200. The input/output chip 1240 may also connect various input/output units to the input/output controller 1220 via a USB port, a parallel port, a serial port, a keyboard port, a mouse port, or the like.

The program is provided by a computer-readable storage medium such as a DVD-ROM or an IC card. The program is read from a computer-readable storage medium, installed in the storage device 1224, the RAM 1214, or the ROM 1230, which is also an example of a computer-readable storage medium, and executed by the CPU 1212. The information processing described in these programs is read by the computer 1200 and provides cooperation between the programs and the various types of hardware resources. The device or method may be configured by implementing operation or processing of information according to use of the computer 1200.

For example, in a case in which communication is performed between the computer 1200 and an external device, the CPU 1212 may execute a communication program loaded in the RAM 1214 and instruct the communication interface 1222 to perform communication processing on the basis of processing described in the communication program. Under the control of the CPU 1212, the communication interface 1222 reads transmission data stored in a transmission buffer area provided in a recording medium such as the RAM 1214, the storage device 1224, the DVD-ROM, or the IC card, transmits the read transmission data to the network, or writes reception data received from the network to a reception buffer area or the like provided on the recording medium.

In addition, the CPU 1212 may cause the RAM 1214 to read all or a necessary portion of a file or database stored in an external recording medium such as the storage device 1224, a DVD drive (DVD-ROM), an IC card, or the like, and may execute various types of processing on data on the RAM 1214. Next, the CPU 1212 may write back the processed data to the external recording medium.

Various types of information such as various types of programs, data, tables, and databases may be stored in a recording medium and subjected to information processing. The CPU 1212 may execute various types of processing on the data read from the RAM 1214, including various types of operations, information processing, condition determination, conditional branching, unconditional branching, information retrieval/replacement, and the like, which are described throughout the disclosure and specified by a command sequence of a program, and writes back the results to the RAM 1214. In addition, the CPU 1212 may search for information in a file, a database, or the like in the recording medium. For example, in a case in which a plurality of entries each having an attribute value of a first attribute associated with an attribute value of a second attribute is stored in the recording medium, the CPU 1212 may search for an entry in which the attribute value of the first attribute matches the specified condition from the plurality of entries, read the attribute value of the second attribute stored in the entry, and thereby acquire the attribute value of the second attribute associated with the first attribute satisfying the predetermined condition.

The program or software module described above may be stored in a computer-readable storage medium on the computer 1200 or in the vicinity of the computer 1200. Furthermore, a recording medium such as a hard disk or a RAM provided in a server system connected to a dedicated communication network or the Internet can be used as a computer-readable storage medium, thereby providing a program to the computer 1200 via the network.

The blocks in the flowcharts and block diagrams in the first embodiment, the second embodiment, and the third embodiment may represent stages of a process in which an operation is performed or "units" of a device that are responsible for performing the operation. Certain stages and "units" may be implemented by dedicated circuit, programmable circuit provided with computer-readable instructions stored on a computer-readable storage medium, and/or a processor provided with computer-readable instructions stored on a computer-readable storage medium. The dedicated circuits may include digital and/or analog hardware circuits, and may include integrated circuits (ICs) and/or discrete circuits. The programmable circuit may include reconfigurable hardware circuit including, for example, logical conjunction, logical disjunction, exclusive disjunction, NAND, NOR, and other logical operations, flip-flops, registers, and memory elements, such as field programmable gate arrays (FPGA) and programmable logic arrays (PLA).

A computer-readable storage medium may include any tangible device capable of storing instructions for execution by a suitable device, such that a computer-readable storage medium having instructions stored therein includes a product including instructions that may be executed to create means for performing the operations specified in the flowcharts or block diagrams. Examples of the computer-readable storage medium may include an electronic storage medium, a magnetic storage medium, an optical storage medium, an electromagnetic storage medium, a semiconductor storage medium, and the like. More specific examples of the computer-readable storage medium may include a floppy disk (registered trademark), a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-Ray disk (registered trademark), a memory stick, an integrated circuit card, and the like.

The computer-readable instructions may include either source code or object code written in any combination of one or more programming languages, including assembler instructions, instruction-set-architecture (ISA) instructions, machine instructions, machine-dependent instructions, microcode, firmware instructions, state-setting data, or an object oriented programming language such as Smalltalk (registered trademark), JAVA (registered trademark), C++, or the like, and conventional procedural programming languages, such as the "C" programming language or similar programming languages.

The computer-readable instructions may be provided for a processor of general purpose computer, special purpose computer, or other programmable data processing device, or a programmable circuit, either locally or over a wide area network (WAN), such as a local area network (LAN), the Internet, or the like, to cause the processor of general purpose computer, special purpose computer, or other programmable data processing device, or the programmable circuit to execute the computer-readable instructions to generate means for performing the operations specified in the flowcharts or block diagrams. Examples of the processor include a computer processor, a processing unit, a microprocessor, a digital signal processor, a controller, a microcontroller, and the like.

Although the first embodiment, the second embodiment, and the third embodiment have been described above, the technical scope of the disclosure is not limited to the scope described in the embodiments. It is apparent to those skilled in the art that various modifications or improvements can be made to the embodiments. It is apparent from the description of the claims that a mode to which such a change or improvement is added can also be included in the technical scope of the disclosure.

It should be noted that the order of execution of each processing such as operations, procedures, steps, and stages in the devices, systems, programs, and methods illustrated in the claims, the specification, and the drawings can be realized in any order unless "before", "prior to", or the like is explicitly stated, and unless the output of the previous processing is used in the later processing. Even if the operation flow in the claims, the specification, and the drawings is described using "First,", "Next,", and the like for convenience, it does not mean that it is essential to perform in this order.

The disclosure of Japanese Patent Application No. 2022-182131 filed on November 14, 2022, the disclosure of Japanese Patent Application No. 2023-062335 filed on April 6, 2023, and the disclosure of Japanese Patent Application No. 2023-063765 filed on April 10, 2023 are incorporated herein by reference in their entirety.

Description of Reference Numerals

| | |
|---|---|
| 120 | Central Brain |
| 1200 | Computer |
| 1210 | Host controller |
| 1212 | CPU |
| 1214 | RAM |
| 1216 | Graphic controller |
| 1218 | Display device |
| 1220 | Input/output controller |
| 1222 | Communication interface |
| 1224 | Storage device |
| 1230 | ROM |
| 1240 | Input/output chip |

**Claims**

1. An information processing device comprising:

   a calculation unit that calculates, for each of a plurality of combinations of a predetermined number of pieces of sensor information among a plurality of pieces of sensor information included in a vehicle, index values for controlling a wheel speed and an inclination of each of four wheels of the vehicle, and suspensions that support the wheels for each of the wheel speed, the inclination, and the suspension, and calculates control variables for each of the wheel speed, the inclination, and the suspension by aggregating the index values; and
   a control unit that controls autonomous driving on the basis of the control variables.

2. The information processing device according to claim 1, wherein
the control unit controls the autonomous driving in units of a billionth of a second on the basis of the control variables.

3. The information processing device according to claim 1, wherein the calculation unit selects a combination of the plurality of pieces of sensor information for autonomous driving control targets including at least a wheel speed, an inclination, and a suspension, and calculates a predetermined number of index values for each autonomous driving control target by the combination of the selected pieces of sensor information.

4. The information processing device according to claim 3, wherein the calculation unit calculates a predetermined number of index values for each autonomous driving control target on the basis of the combination of the plurality of pieces of sensor information changed according to a traveling status of the vehicle.

5. An information processing device comprising:

a calculation unit that calculates, for each of a plurality of combinations of a predetermined number of pieces of sensor information among a plurality of pieces of sensor information included in a vehicle, index values for controlling autonomous driving control targets including at least a wheel speed and an inclination of each wheel of the vehicle, and suspensions that support the wheels for each of the wheel speed, the inclination, and the suspension, and calculates a control variable for each autonomous driving control target by aggregating the index values; and
a control unit that controls autonomous driving on the basis of the control variable calculated by the calculation unit, wherein
the calculation unit uses a control variable calculated for one autonomous driving control target as an index value for calculating a control variable for another autonomous driving control target.

6. The information processing device according to claim 5, wherein the calculation unit weights the mutually used control variables of the autonomous driving control target.

7. The information processing device according to claim 1 or 5, wherein
the calculation unit calculates the control variable from the index value by multivariate analysis by an integration method using deep learning.

8. The information processing device according to claim 1 or 5, wherein the inclination includes a steering angle and a camber angle.

9. The information processing device according to claim 5, wherein the calculation unit selects a combination of the plurality of pieces of sensor information for the autonomous driving control target, and calculates a predetermined number of index values for each autonomous driving control target on the basis of the combination of the selected pieces of sensor information.

10. A program for causing a computer to function as the information processing device according to any one of claims 1 to 9.

FIG.1

# FIG.2

# FIG.3

```
         ┌─────────────┐
         │    START    │
         └──────┬──────┘
                │
   ┌────────────────────────────┐
   │  ACQUIRE SENSOR INFORMATION │ ── S10
   └────────────┬───────────────┘
                │
   ┌────────────────────────────┐
   │  CALCULATE CONTROL VARIABLE │ ── S11
   └────────────┬───────────────┘
                │
   ┌────────────────────────────┐
   │ CONTROL AUTONOMOUS DRIVING  │ ── S12
   └────────────┬───────────────┘
                │
         ┌──────┴──────┐
         │     END     │
         └─────────────┘
```

FIG.4

FIG.5

FIG.6

FIG.7

FIG.8

12

31

30

A2

# FIG.9

1200

1212

CPU

1218
DISPLAY
DEVICE

1216
GRAPHIC
CONTROLLER

1210
HOST
CONTROLLER

1214
RAM

1222
COMMUNICATION
INTERFACE

1220
INPUT/
OUTPUT
CONTROLLER

1224
STORAGE
DEVICE

1240
INPUT/
OUTPUT
CHIP

1230
ROM

## FIG.10

```
                    ┌──────────────┐
                    │    START     │
                    └──────┬───────┘
                           │                    ┌────────────────────────┐
CALCULATE WHEEL SPEED      │ 100                │ PROCESS OF SELECTING    │ 116
INDEX VALUE                │                    │ SENSOR USEFUL FOR       │
            ┌──────────────┴──────────────┐     │ CALCULATING INDEX       │
            │ PROCESS OF SELECTING SENSOR │     │ VALUE OF INCLINATION    │
            │ USEFUL FOR CALCULATING      │     │ (CAMBER ANGLE)          │
            │ INDEX VALUE OF WHEEL SPEED  │     └───────────┬────────────┘
            └──────────────┬──────────────┘                 │ 118
                           │ 102                 ┌───────────┴────────────┐
            ┌──────────────┴──────────────┐     │ ACQUIRE SELECTED        │
            │ ACQUIRE SELECTED            │     │ SENSOR INFORMATION      │
            │ SENSOR INFORMATION          │     └───────────┬────────────┘
            └──────────────┬──────────────┘                 │ 120
                           │ 104                 ┌───────────┴────────────┐
            ┌──────────────┴──────────────┐     │ CALCULATE (300) INDEX  │
            │ CALCULATE (300)             │     │ VALUES OF INCLINATION  │
            │ INDEX VALUES OF             │     │ (CAMBER ANGLE)         │
            │ WHEEL SPEED                 │     └───────────┬────────────┘
            └──────────────┬──────────────┘                 │ 122
                           │ 106                 ┌───────────┴────────────┐
            ┌──────────────┴──────────────┐     │ TEMPORARILY STORE      │
            │ TEMPORARILY STORE           │     │ INDEX VALUE            │
            │ INDEX VALUE OF              │     │ OF INCLINATION         │
            │ WHEEL SPEED                 │     │ (CAMBER ANGLE)         │
            └──────────────┬──────────────┘     └───────────┬────────────┘
                           │ 108                             │ 124
            ┌──────────────┴──────────────┐     ┌───────────┴────────────┐
            │ PROCESS OF SELECTING        │     │ PROCESS OF SELECTING    │
            │ SENSOR USEFUL FOR           │     │ SENSOR USEFUL FOR       │
            │ CALCULATING INDEX           │     │ CALCULATING INDEX       │
            │ VALUE OF INCLINATION        │     │ VALUE OF SUSPENSION     │
            │ (STEERING ANGLE)            │     └───────────┬────────────┘
            └──────────────┬──────────────┘                 │ 126
                           │ 110                 ┌───────────┴────────────┐
            ┌──────────────┴──────────────┐     │ ACQUIRE SELECTED        │
            │ ACQUIRE SELECTED            │     │ SENSOR INFORMATION      │
            │ SENSOR INFORMATION          │     └───────────┬────────────┘
            └──────────────┬──────────────┘                 │ 128
                           │ 112                 ┌───────────┴────────────┐
            ┌──────────────┴──────────────┐     │ CALCULATE (300) INDEX  │
            │ CALCULATE (300) INDEX       │     │ VALUES OF SUSPENSION   │
            │ VALUES OF INCLINATION       │     └───────────┬────────────┘
            │ (STEERING ANGLE)            │                 │ 130
            └──────────────┬──────────────┘     ┌───────────┴────────────┐
                           │ 114                 │ READ INDEX VALUES      │
            ┌──────────────┴──────────────┐     │ OF WHEEL SPEED AND     │
            │ TEMPORARILY STORE           │     │ INCLINATION            │
            │ INDEX VALUE                 │     │ (STEERING ANGLE,       │
            │ OF INCLINATION              │     │ CAMBER ANGLE)          │
            │ (STEERING ANGLE)            │     └───────────┬────────────┘
            └──────────────┬──────────────┘                 │ 132
                           │                     ┌───────────┴────────────┐
                           └─────────────────────│ CALCULATE CONTROL      │
                                                 │ VARIABLE               │
                                                 └───────────┬────────────┘
                                                             │ 134
                                                 ┌───────────┴────────────┐
                                                 │ CONTROL                │
                                                 │ AUTONOMOUS DRIVING     │
                                                 └───────────┬────────────┘
                                                             │
                                                 ┌───────────┴────────────┐
                                                 │         END            │
                                                 └────────────────────────┘
```

CALCULATE INCLINATION (STEERING ANGLE) INDEX VALUE

CALCULATE INCLINATION (CAMBER ANGLE) INDEX VALUE

CALCULATE SUSPENSION INDEX VALUE

## INTERNATIONAL SEARCH REPORT

| International application No. |
|---|
| **PCT/JP2023/040649** |

**A.    CLASSIFICATION OF SUBJECT MATTER**

*B60W 40/00*(2006.01)i; *B60G 3/00*(2006.01)i; *B60L 15/20*(2006.01)i; *B60W 40/02*(2006.01)i; *B60W 40/06*(2012.01)i;
*B60W 40/10*(2012.01)i; *B62D 7/15*(2006.01)i; *G08G 1/00*(2006.01)i
FI:   B60W40/00; B62D7/15 A; B60G3/00; B60W40/06; B60L15/20 S; G08G1/00 D; B60W40/02; B60W40/10

According to International Patent Classification (IPC) or to both national classification and IPC

**B.    FIELDS SEARCHED**

Minimum documentation searched (classification system followed by classification symbols)

B60W40/00; B60G3/00; B60L15/20; B60W40/02; B60W40/06; B60W40/10; B62D7/15; G08G1/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | WO 2021/090897 A1 (SONY CORP.) 14 May 2021 (2021-05-14)<br>paragraphs [0015]-[0030] | 1-10 |
| A | WO 2021/198775 A1 (MOBILEYE VISION TECHNOLOGIES LTD.) 07 October 2021<br>(2021-10-07)<br>paragraphs [0072]-[0131], fig. 1-3C | 1-10 |

☐ Further documents are listed in the continuation of Box C.         ☑ See patent family annex.

| | |
|---|---|
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **15 January 2024** | **23 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2023/040649**

| Patent document cited in search report | | | Publication date (day/month/year) | Patent family member(s) | | | Publication date (day/month/year) |
|---|---|---|---|---|---|---|---|
| WO | 2021/090897 | A1 | 14 May 2021 | US | 2023/0045416 | A1 | |
| | | | | paragraphs [0047]-[0062] | | | |
| | | | | EP | 4057252 | A1 | |
| | | | | CN | 114586044 | A | |
| WO | 2021/198775 | A1 | 07 October 2021 | US | 2023/0127230 | A1 | |
| | | | | CN | 115735168 | A | |

Form PCT/ISA/210 (patent family annex) (July 2022)

# EP 4 620 764 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2022035198 A
- JP 2022182131 A
- JP 2023062335 A
- JP 2023063765 A